# EUROPÄISCHE PATENTSCHRIFT

(11) **EP 0 868 613 B1**
(45) Veröffentlichungstag und Bekanntmachung des Hinweises auf die Patenterteilung: **20.09.2000**
(21) Anmeldenummer: 96946243.1
(22) Anmeldetag: 18.12.1996
(51) Int. Cl.: F15B 21/04

(54) **HYDRAULISCHES KOMPAKTAGGREGAT**
COMPACT HYDRAULIC UNIT
UNITE HYDRAULIQUE COMPACTE

(30) Priorität: 22.12.1995 DE 19548204
(43) Veröffentlichungstag der Anmeldung: 07.10.1998
(73) Patentinhaber: Mannesmann Rexroth Aktiengesellschaft, 97816 Lohr am Main (DE)
(72) Erfinder: FASSNACHT, Kurt, D-97794 Rieneck (DE); KULAWIK, Hubert, D-97846 Partenstein (DE); HARTMANN, Günter, D-97737 Gemünden (DE); BOCK, Herbert, D-97782 Gräfendorf (DE)
(86) Internationale Anmeldenummer: DE9602477
(87) Internationale Veröffentlichungsnummer: WO9723733

(56) Entgegenhaltungen:
- CH-A- 596 697
- DE-A- 4 421 375
- US-A- 3 897 178
- US-A- 5 332 369

## Beschreibung

Die Erfindung geht aus von einem hydraulischen Kompaktaggregat, das die Merkmale aus dem Oberbegriff des Anspruches 1 aufweist.

Ein hydraulisches Aggregat mit einem ringzylindrischen Druckmittelbehälter, der durch eine äußere Außenwand, eine innere Außenwand sowie zwei Stirnwände bzw. stirnseitige Flansche gebildet wird, mit einem vom Druckmittelbehälter umgebenen geschlossenen Elektromotor und mit einer vom Elektromotor antreibbaren Hydropumpe ist aus dem DE-GM 82 07 794 bekannt.

Einen geschlossenen Elektromotor verwendet man, damit z.B. keine kleinen Metallteile oder stromleitende Flüssigkeiten in das Innere des Elektromotors gelangen können und dort elektrische oder mechanische Schäden verursachen. Geschlossene Elektromotoren werden üblicherweise mit Hilfe von an ihrer Außenseite entlangströmender Luft gekühlt, wobei der Luftstrom durch ein Lüfterrad erzeugt wird.

Das in dem DE-GM 82 07 794 gezeigte hydraulische Aggregat baut noch recht groß. Die Kühlung des Elektromotors dürfte für einen Dauerbetrieb des Aggregats nicht genügen.

Aus der US-A-3 897 178 ist ein Pumpenaggregat bekannt, dessen Pumpe eine Kreiselpumpe mit einem Laufrad ist, das von einem Elektromotor angetrieben wird. Solche Pumpenaggregate werden, worauf an mehreren Stellen der genannten Veröffentlichung auch hingewiesen wird, üblicherweise dazu verwendet, um Wasser in einem Kreislauf, zum Beispiel in einer Heizungsanlage oder in einem Schwimmbad, oder auch offen zu fördern, zum Beispiel aus einem Erdloch abzupumpen oder aus einer Zisterne einem Verbrauchsort zuzuführen. Auch wenn bei dem aus der US-A-3 897 178 ersichtlichen Pumpenaggregat im eigentlichen Pumpengehäuse Hohlräume vorhanden sind und der Elektromotor von einem Flüssigkeitsmantel umgeben ist, so kann hier nicht vom Vorhandensein eines Druckmittelbehälters gesprochen werden, wie ihn ein hydraulisches Kompaktaggregat gemäß dem Oberbegriff des Patentanspruchs 1 aufweist. Bei einem solchen hydraulischen Kompaktaggregat dient der Druckmittelbehälter, aus dem die Hydropumpe Druckmittel ansaugt und in den Druckmittel aus einem hydraulischen Kreislauf wieder zurückfließt, zur Abgabe von Wärme aus dem zurückgeflossenen Druckmittel und der Verfügbarkeit von unterschiedlich großen sich im Kreislauf befindlichen Druckmittelmengen.

Bei dem aus der US-A-3 897 178 bekannten Pumpenaggregat treibt der Elektromotor ein sich innerhalb des Motorgehäuses befindliches Lüfterrad an, das innerhalb des Elektromotors in einem geschlossenen Kreislauf eine interne Luftströmung aufrechterhält, von der Wärme an den den Elektromotor umgebenden Flüssigkeitsmantel abgegeben werden soll.

In der US-A-5 332 369 ist ein Pumpenaggregat gezeigt, das bis auf den internen Kühlluftstrom demjenigen nach der US-A-3 897 178 entspricht und wie dieses für die Förderung von Wasser eingesetzt wird.

Der Erfindung liegt die Zielsetzung zugrunde, ein hydraulisches Kompaktaggregat mit einem ringzylindrischen Druckmittelbehälter, mit einem geschlossenen Elektromotor und mit einer vom Elektromotor antreibbaren Hydropumpe zu schaffen, das sehr kompakt baut und bei dem die Kühlung des Elektromotors einen Dauerbetrieb ermöglicht.

Dieses Ziel wird erfindungsgemäß durch ein hydraulisches Kompaktaggregat erreicht, das die Merkmale aus dem Oberbegriff des Patentanspruches 1 aufweist und bei dem gemäß dem kennzeichnenden Teil des Patentanspruchs 1 der Druckmittelbehälter den Elektromotor eng umgibt und die innere Außenwand des Druckmittelbehälters als Leitmittel für den über den Elektromotor streichenden Kühlluftstrom dient. Dadurch, daß der Druckmittelbehälter den Elektromotor eng umgibt, wird zweierlei erreicht. Zum einen erhält man eine sehr kompakte Bauweise des hydraulischen Aggregats. Zum anderen wird die Kühlluft nahe am Elektromotor über diesen geleitet und streicht auch an den einem Lüfterrad entfernten Wickelköpfen eng am Gehäuse des Elektromotors entlang, so daß sie viel Wärme aufnehmen und aus dem Innenraum des Druckmittelbehälters nach außen transportieren kann.

Vorteilhafte Ausgestaltungen eines erfindungsgemäßen hydraulischen Kompaktaggregats kann man den Unteransprüchen entnehmen.

Bevorzugt erstrecken sich zwischen einer Außenwand des Elektromotors und der inneren Außenwand des Druckmittelbehälters axial verlaufende Rippen. Über diese kann sich der Elektromotor an der inneren Außenwand des Druckmittelbehälters abstützen. Zugleich wird durch die Rippen eine große Wärmeabgabefläche geschaffen, wobei die Kühlluft zwischen den Rippen entlangströmen kann.

Eine geringe Anzahl von Einzelteilen und nur wenige Dichtstellen erhält man, wenn gemäß Anspruch 3 der eine stirnseitige Flansch des Druckmittelbehälters als Boden einstückig mit der äußeren Außenwand und mit der inneren Außenwand des Druckmittelbehälters ausgebildet ist.

Es ist möglich, den Elektromotor hinsichtlich seiner radialen Position zum Druckmittelbehälter dadurch festzulegen, daß er von innen die innere Außenwand des Druckmittelbehälters berührt. Der Elektromotor kann aber auch gemäß Anspruch 4 von einem stirnseitigen Flansch des Druckmittelbehältrs getragen werden, wobei dadurch die radiale und zugleich auch die axiale Lage des Elektromotors bezüglich des Druckmittelbehälters fixiert wird. Insbesondere kann ein stirnseitiger Flansch des Druckmittelbehälters einstückig mit einem Gehäuseteil des Elektromotors ausgebildet sein.

Besonders günstig erscheint es, wenn gemäß Anspruch 7 ein stirnseitiger Flansch des Druckmittelbehälters einstückig mit einem Gehäuseteil der Hydropumpe hergestellt ist.

Standbeine zum Aufstellen eines erfindungsgemäßen hydraulischen Kompaktaggregats sind gemäß Anspruch 8 vorteilhafterweise an wenigstens einem stirnseitigen Flansch des Druckmittelbehälters befestigt. Um nicht zusätzliche Befestigungsmittel verwenden zu müssen, werden die Standbeine zweckmäßigerweise mit den Schrauben, mit denen ein stirnseitiger Flansch am Druckmittelbehälter befestigt ist, am Flansch fixiert. Der Flansch, an dem die Standbeine befestigt sind, besitzt gemäß Anspruch 9 auf der Außenseite Aussparungen, die eng an die Form der Standbeine angepaßt sind und deren Positionierung vorgeben. Je nach Wunsch kann ein erfindungsgemäßes hydraulisches Kompaktaggregat liegend oder stehend aufgestellt werden. Vorteilhafterweise werden für beide Möglichkeiten die gleichen Standbeine verwendet, wobei deren Anordnung bei einer liegenden Position eine andere ist als bei einer stehenden Position des Kompaktaggregats.

Ein Flansch des Druckmittelbehälters kann auch mit einem Kanal oder mit einer Öffnung versehen sein, die in einem Strömungspfad für das Druckmittel liegt.

Gemäß Anspruch 11 erstreckt sich vorteilhafterweise von einer Rücklauföffnung des Druckmittelbehälters aus ein rohrförmiger Anguß um ein vielfaches der Wandstärke, die der Druckmittelbehälter um die Rücklauföffnung herum hat, in das Innere des Druckmittelbehälters hinein. Der Anguß kann so lang gemacht werden, daß sich sein freies Ende immer unter dem Druckmittelniveau befindet. Das Druckmittel läuft dann in den Druckmittelbehälter zurück, ohne daß es dort stark verwirbelt wird und aufschäumt und ohne daß sich wesentliches Geräusch entwickelt.

Ein Kühler für das Druckmittel wird gemäß Anspruch 12 bevorzugt radial innerhalb der inneren Außenwand des Druckmittelbehälters angeordnet und somit von dem über den Elektromotor streichenden Kühlluftstrom durchströmt.

Bei einem erfindungsgemäßen hydraulischen Kompaktaggregat ist auch angestrebt worden, mit wenig außenliegenden, sichtbaren Leitungen oder Rohren auszukommen. Deshalb ist die Verwendung eines solchen Kühlers besonders vorteilhaft, aus dem das Druckmittel unmittelbar, zum Beispiel durch eine Öffnung in einem stirnseitigen Flansch in den Druckmittelbehälter hineinfließt. Leckageflüssigkeit der Pumpe und/oder rücklaufende Flüssigkeit wird gemäß Anspruch 13 einem Eingang des Kühlers bevorzugt über einen sich innerhalb des Druckmittelbehälters befindlichen Strömungspfad zugeführt. Ist der Kühler unmittelbar auf den Druckmittelbehälter aufgeflanscht, so ist also weder in Zulauf zum Kühler noch im Rücklauf vom Kühler in den Druckmittelbehälter hinein ein Rohr außen am Druckmittelbehälter notwendig. Das durch den Druckmittelbehälter führende Rohr steckt gemäß Anspruch 14 mit seinen Enden jeweils in einer Dichtung, die den zum Kühler führenden Strömungspfad des Druckmittels nicht nur gegen das Innere des Druckbehälters abdichtet, sondern die auch eine metallische Berührung zwischen dem Rohr und Teilen des Druckmittelbehälters verhindert und damit geräuschdämpfend wirkt.

Vorteilhafterweise wird gemäß Anspruch 15 der Kühlluftstrom von einem Lüfterrad erzeugt, das radial innerhalb der inneren Außenwand des Druckmittelbehälters angeordnet ist und auf der Welle des Elektromotors sitzt.

Schließlich sei noch auf die besonders vorteilhafte Ausgestaltung gemäß Anspruch 16 hingewiesen, nach dem Kühlrippen außen am Druckmittelbehälter schräg zu dessen Achsrichtung, vorzugsweise in einem Winkel von 45 Grad zur Achsrichtung verlaufen. Dies bewirkt, daß sowohl bei einer stehenden als auch bei einer liegenden Position des Kompaktaggregats kein Stau von warmer Luft unter einer Kühlrippe entsteht.

Mehrere Ausführungsbeispiele eines erfindungsgemäßen hydraulischen Kompaktaggregates sind in den Zeichnungen dargestellt. Anhand der Figuren dieser Zeichnungen wird die Erfindung nun näher erläutert.

Es zeigen
- Figur 1: einen Längsschnitt durch die beiden ersten Ausführungs beispiele, wobei in der unteren Hälfte des Längsschnittes die erste Ausführung und in der oberen Hälfte des Längsschnittes die zweite Ausführung dargestellt ist,
- Figur 2: einen Querschnitt durch das erste Ausführungsbeispiel,
- Figur 3: einen Querschnitt durch das zweite Ausführungsbeispiel,

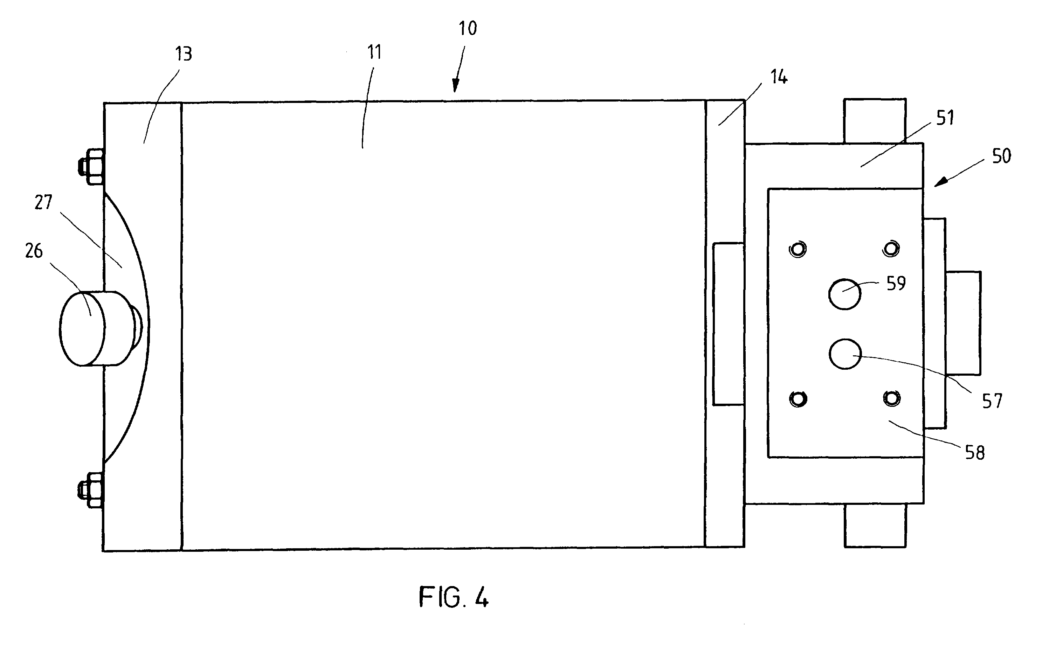

- Figur 4: eine radiale Draufsicht auf das erste oder das zweite Ausführungsbeispiel,

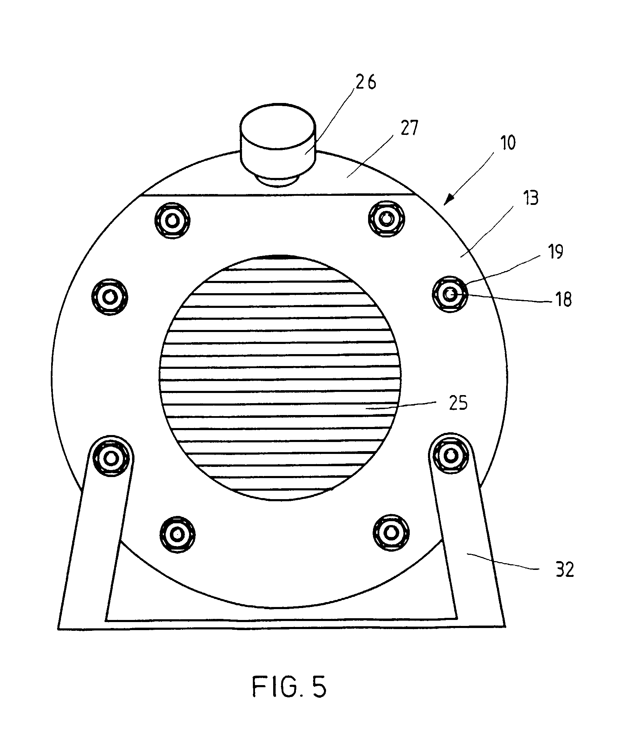

- Figur 5: eine Draufsicht auf die eine Stirnseite des ersten oder zweiten Ausführungsbeispiels,

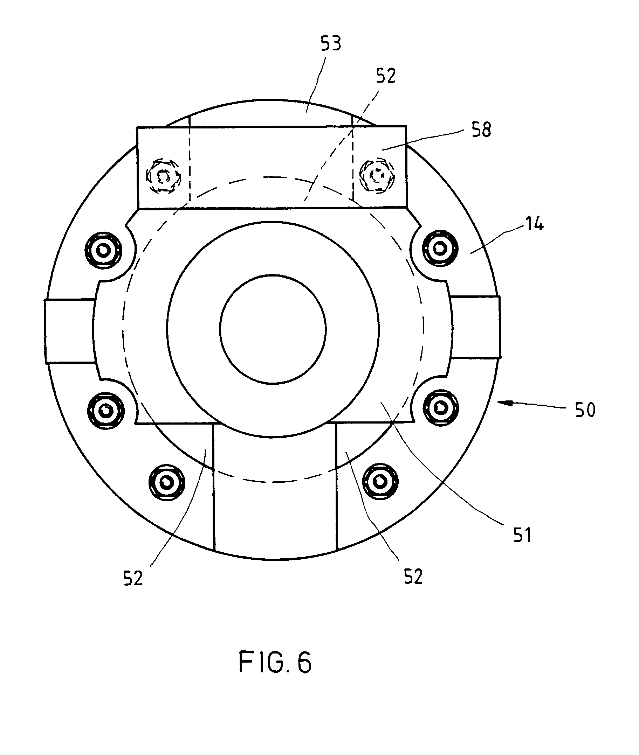

- Figur 6: eine Draufsicht auf die andere Stirnseite des ersten oder zweiten Ausführungsbeispiels,
- Figur 7: ein drittes Ausführungsbeispiel, das teilweise in An sicht und teilweise in einem Axialschnitt dargestellt ist,
- Figur 8: eine Ansicht des dritten Ausführungsbeispiels in Richtung des Pfeiles F aus Figur 7,
- Figur 9: eine Ansicht des dritten Ausführungsbeispiels in Richtung des Pfeiles G aus Figur 7,
- Figur 10: einen Schnitt durch den bloßen Druckmittelbehälter des dritten Ausführungsbeispiels entlang der Linie X-X aus Figur 9,
- Figur 11: einen Schnitt durch den bloßen Druckmittelbehälter entlang der Linie XI-XI aus Figur 9,
- Figur 12: einen Schnitt durch das dritte Ausführungsbeispiel entlang der Linie XII-XII aus Figur 9,
- Figur 13: eine äußere Ansicht des stirnseitigen Flansches, mit dem der Druckmittelbehälter des dritten Ausführungsbeispiels verschlossen ist und der zugleich auch ein Bauteil des vom Druckmittelbehälter umgebenen Elektromotors ist,
- Figur 14: einen Schnitt entlang der Linie XIV-XIV aus Figur 13,
- Figur 15: einen Schnitt entlang der Linie XV-XV aus Figur 13,
- Figur 16: eine Draufsicht auf die äußere Bodenseite des bloßen, weitgehend achteckigen Druckmittelbehälters eines vierten Ausführungsbeispiels,
- Figur 17: eine Sicht entgegen der Sichtrichtung der Figur 16 in das Innere des Druckmittelbehälters,
- Figur 18: eine Seitenansicht des Druckmittelbehälters aus den Figuren 16 und 17,
- Figur 19: einen Schnitt entlang der Linie XIX-XIX aus Figur 18,
- Figur 20: eine Draufsicht auf den Druckmittelbehälter der Figur 18 in Richtung des Pfeiles K,
- Figur 21: eine Außenansicht des Verschlußflansches für den Druckmittelbehälter gemäß den Figuren 16 bis 20,
- Figur 22: in einem vergrößerten Maßstab das Ende eines durch den Druckmittelbehälter verlaufenden Rohres mit aufgeschobener Dichtung und
- Figur 23: eine Seitenansicht des Druckmittelbehälters eines fünften Ausführungsbeispiels, bei dem Kühlrippen an der Außenwand des Druckmittelbehälters schräg verlaufen.

Der Ölbehälter 10 der beiden ersten Ausführungsbeispiele besitzt eine ringzylindrische, insbesondere eine kreisringzylindrische Form und wird durch ein äußeres Behälterrohr 11, ein inneres Behälterrohr 12 und zwei stirnseitige Flansche 13 und 14 gebildet. Jeder der beiden Flansche besitzt einen sich in axialer Richtung erstreckenden Ringbund 15, über den die Behälterrohre 11 und 12 geschoben sind und der dabei die beiden Behälterrohre zentriert. In einer inneren und einer äußeren Ringnut des Ringbundes 15 liegt jeweils ein Dichtring 16 bzw. 17, der den Spalt zwischen jedem Behälterrohr und dem jeweiligen Ringbund abdichtet. Die beiden Behälterrohre 11 und 12 sowie die beiden Flansche 13 und 14 werden mit Hilfe von Zugankern 18 zusammengehalten, die durch den Ölbehälter 10 hindurchverlaufen, durch die Flansche 13 und 14 dicht nach außen treten und auf die die Schraubenmuttern 19 aufgeschraubt sind.

Zentral vor dem durch den Ölbehälter 10 umschlossenen Hohlraum 24 ist im Flansch 13 ein kreisrunder Kühler 25 für zum Ölbehälter 10 zurückfließendes Öl angeordnet. Durch den Kühler 25 kann Luft in den Hohlraum 24 gelangen. Der Flansch 13 ist außerdem an seiner in Gebrauchslage des Kompaktaggregats höchsten Stelle mit einem Öleinfüllstützen 26 versehen, der sich in einer schräg zur Achse des Ölbehälters verlaufenden ebenen Fläche 27 des Flansches 13 befindet. Ein im Flansch 13 eingegossener Ringkanal 28 führt vom Öleinfüllstutzen 26 in das Innere des Ölbehälters 10.

Mit Hilfe zweier Zuganker 18 und der zugehörigen Schraubenmuttern 19 ist ein Gestell 32 mit dem Ölbehälter 10 verbunden.

In dem Hohlraum 24 befindet sich ein geschlossener Elektromotor 35 mit einer Motorwelle 36, mit einem Rotor 37 und mit einem Stator 38. Der Elektromotor ist in den Zeichnungen stark schematisiert dargestellt. Seine Motorwelle 36 ist in zwei Lagerschilden 39 und 40 gelagert. Auf einem über den Lagerschild 40 in Richtung auf den Kühler 25 zu hinausragenden Wellenstummel ist ein Lüfterrad 41 befestigt, das durch den Kühler 25 hindurch Luft ansaugt. Diese Luft wird nicht nur zur Kühlung von Öl, sondern auch zur Kühlung des Elektromotors 35 verwendet. Besonders vorteilhaft ist dabei, daß im Sinne eines kompaktbauenden Aggregates der Abstand zwischen dem inneren Behälterrohr 12 des ölbehälters 10 und dem Gehäusemantel 42 des Elektromotors 35 klein gemacht ist. Dabei reicht der freie Strömungsquerschnitt für den zur Kühlung notwendigen Luftstrom aus. Kühlrippen 43 reichen vom Gehäusemantel 42 des Elektromotors 35 bis zum inneren Behälterrohr 12 oder bis nahe an dieses heran, so daß durch das innere Behälterrohr die Luft an den Rippen gehalten wird und die gesamte vom Lüfterrad 41 geförderte Luft Wärme abtransportiert. Das innere Behälterrohr 12 wirkt wie ein Leitblech, das die Luft an den Rippen 43 hält.

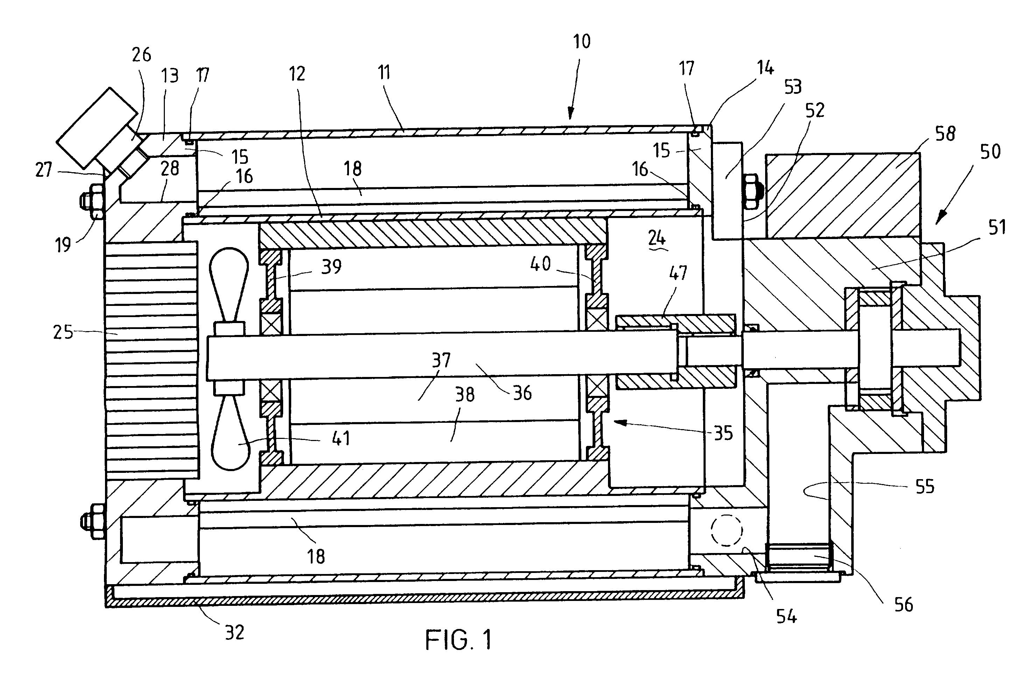

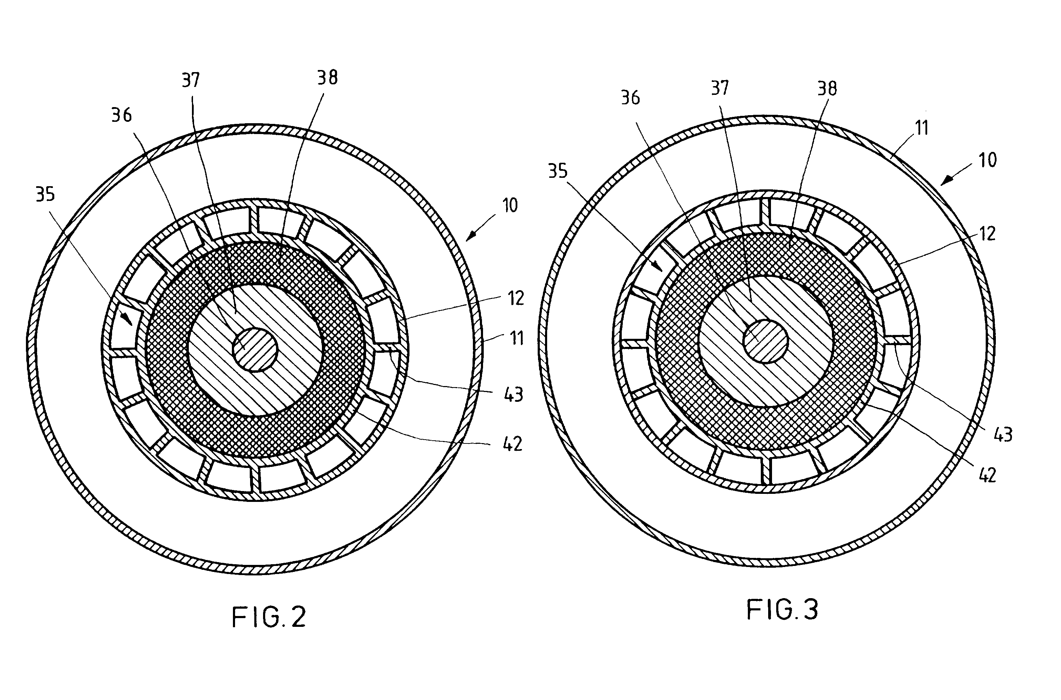

Hinsichtlich des inneren Behälterrohrs 12, des Gehäusemantels 42 und der Kühlrippen 43 besteht der einzige Unterschied zwischen den beiden gezeigten Ausführungsbeispielen. Beim einen Ausführungsbeispiel, zu dem die untere Hälfte der Figur 1 sowie die Figur 2 paßt, sind das innere Behälterrohr 12, der Gehäusemantel 42 des Elektromotors 35 und die Kühlrippen 43 einstückig ausgebildet. Es kann dazu ein Abschnitt eines Strangpreßprofils verwendet werden, bei dem im Bereich des Lüfterrads 41 die innere Wand und die Rippen abgedreht werden. Auch vor dem anderen Lagerschild 40 können die innere Wand und die Kühlrippen abgedreht sein, um einen möglichst freien Austritt der Kühlluft aus den Strömungskanälen zu gewährleisten.

Bei dem in der oberen Hälfte der Figur 1 und in der Figur 3 dargestellten Ausführungsbeispiel sind die Kühlrippen 43 einstückig mit dem Gehäusemantel 42 ausgebildet. Das innere Behälterrohr 12 dagegen ist ein separates Bauteil. Hier ist es möglich, den Elektromotor 35 in seiner Position durch ein Aufschrumpfen des inneren Behälterrohrs 12 zu fixieren.

Von dem Elektromotor 35 ist über eine Kupplung 47 eine Hydropumpe 50 antreibbar, die sich außerhalb des Hohlraums 24 vor dem Flansch 14 befindet. Als Hydropumpe kann eine Konstantpumpe oder eine Verstellpumpe verwendet werden. Das Pumpengehäuse 51 und der Flansch 14 sind aus einem einzigen Stück gefertigt, wobei der das Pumpengehäuse bildende Abschnitt des Bauteils nicht in das Innere des den Flansch bildenden Abschnittes hineingreift, sondern an der Stirnseite des Flansches sitzt. Das Pumpengehäuse 51 überdeckt den Hohlraum 24 bzw. den inneren Radius des Flansches 14 nicht vollständig, so daß noch einzelne Öffnungen 52 zum Durchtritt von Kühlluft vorhanden sind. Außerdem ist der Flansch 14 im Bereich einer oberen Öffnung 52 axial zurückgenommen, so daß im Flansch 14 eine Aussparung 53 entstanden ist, die den Strömungsquerschnitt für die Kühlluft vergrößert.

An seiner der Aussparung 53 gegenüberliegenden, tiefsten Stelle weist der Flansch 14 eine Axialbohrung 54 auf, die sich im Pumpengehäuse 51 fortsetzt und dort in eine Radialbohrung 55 des Pumpengehäuses 51 mündet. Die Radialbohrung ist nach außen durch einen Stopfen 56 verschlossen. Über die Bohrungen 54 und 55 saugt die Hydropumpe 50 Öl aus dem Behälter 10 an. Sie gibt es ab über eine Drucköffnung 57, die sich in einem auf das Pumpengehäuse 51 aufgesetzten Block 58 befindet. Dieser weist weiterhin eine Leckölöffnung 59 auf, aus der das Lecköl der Hydropumpe 50 austreten kann. Dieses wird zusammen mit dem rücklaufenden Öl über den Kühler 25 in den Ölbehälter 10 geleitet.

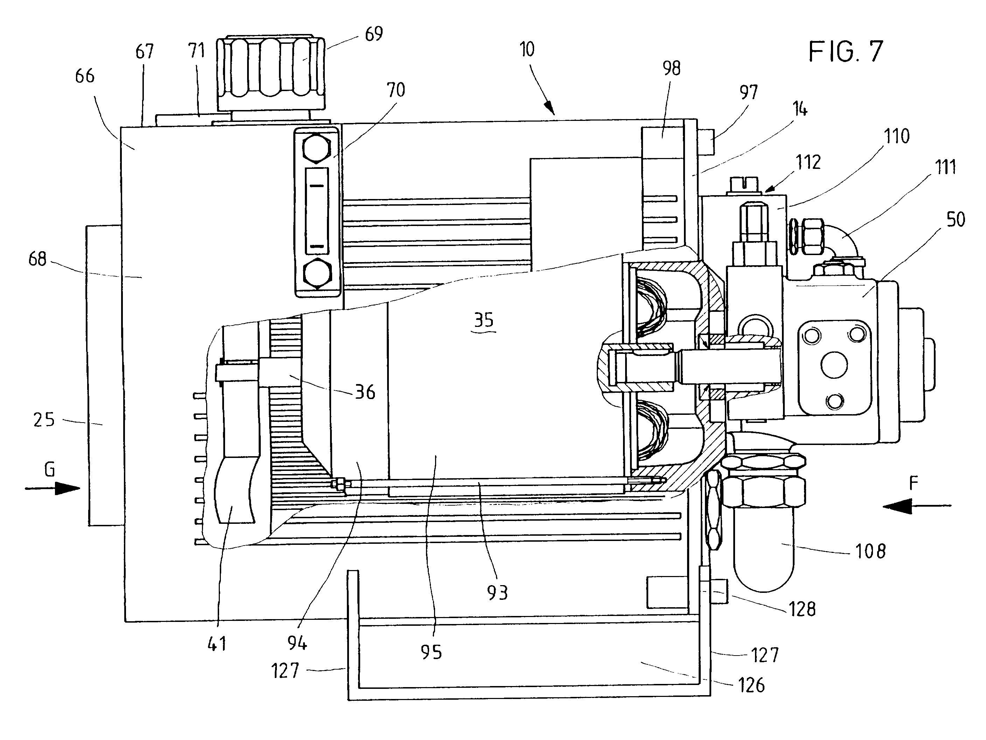

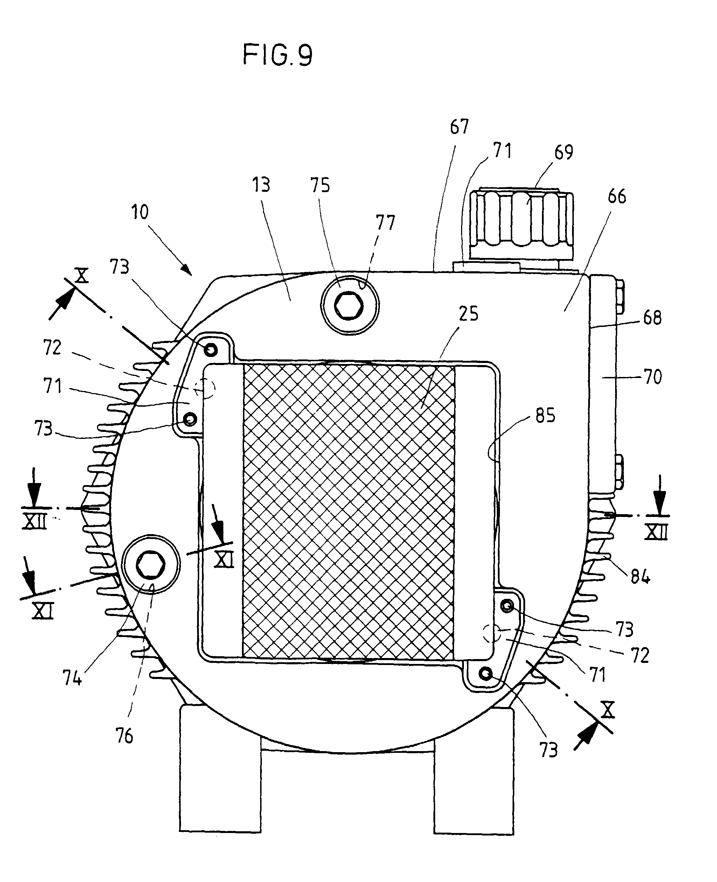

Beim dritten und vierten Ausführungsbeispiel ist der Ölbehälter 10 ebenfalls ringzylindrisch ausgebildet, setzt sich jedoch nicht aus vier, sondern im wesentlichen nur aus zwei Einzelteilen zusammen. Hauptteil ist ein ringzylindrischer Topf 65, der einstückig eine äußere Außenwand 11, eine innere Außenwand 12 und einen die beiden Außenwände an Ihrem einen Ende verbindenden Flansch 13, der im folgenden als Behälterboden bezeichnet sein möge, aufweist. Zweites wesentliches Bauteil des Ölbehälters 10 ist ein zweiter Flansch 14, der im folgenden als Deckel bezeichnet wird. Beim dritten Ausführungsbeispiel sind die äußere Außenwand 11 und die innere Außenwand 12 weitgehend Kreisringzylinder. Die äußere Außenwand 11 besitzt allerdings lokal eine Ausbuchtung 66 mit zwei senkrecht aufeinanderstehenden Wandteilen 67 und 68. Im Wandteil 67 befindet sich eine Einfüllöffnung, die durch einen Verschluß mit einem Handdrehknopf 69 verschlossen ist. Am Wandteil 68 ist ein Niveaugeber 70 befestigt, dessen Schauglas mit dem Inneren des Ölbehälters 10 kommuniziert. Im Wandteil 67 können weitere Öffnungen vorgesehen sein, die nur auf Wunsch mit zum Beispiel einem Schwimmerschalter oder mit einer Rücklaufleitung bestückt werden und, falls derartiges nicht vorgesehen ist, mit Verschlußschrauben 71 verschlossen sind. Im Bereich des Behälterbodens 13 ist ein Ölkühler 25 vorgesehen, der in der axialen Ansicht nach Figur 9 eine weitgehend quadratische Außenkontur besitzt, den radial innerhalb der inneren Außenwand 12 vorhandenen Hohlraum axial weitgehend verschließt und der an zwei gegenüberliegenden Ecken mit Anschlußohren 71 ausgestattet ist, in denen sich jeweils eine als Eingang bzw. Ausgang benutzbare und in der Ansicht nach Figur 9 zur dem Betrachter abgewandten Seite hin offene Anschlußbohrung 72 befindet und die mit durchgehenden Befestigungsbohrungen 73 versehen sind. Die vier Ecken des Kühlers 25 sowie die zwei Anschlußohren 71 werden vom Boden 13 in entsprechend geformten Vertiefungen 85 aufgenommen, so daß der Kühler 25, wie aus Figur 7 ersichtlich, nur wenig über den Boden 13 vorsteht.

Im Boden 13 befinden sich zwei mit Verschlußschrauben 74 bzw. 75 verschlossene Öffnungen 76 bzw. 77, die nur bedarfsweise genutzt werden. Die sich in der in den Figuren 7 bis 9 gezeigten liegenden Gebrauchslage des Kompaktaggregats ganz oben befindliche Öffnung 77 dient als Einfüllöffnung, wenn die Gebrauchslage des Kompaktaggregats stehend ist. Die sich in der unteren Hälfte des Ölbehälters 10 befindliche Öffnung 76 kann als Rücklauföffnung dienen, wenn kein Kühler 25 vorhanden ist oder wenn das rücklaufende Öl nicht durch den Kühler 25 fließen soll.

In jeder zur Aufnahme eines Anschlußohres 71 des Kühlers 25 vorgesehenen Vertiefung besitzt der Boden 13 eine Öffnung 78 bzw. 79, die mit der Anschlußbohrung 72 in einem Anschlußohr des Kühlers fluchtet. Die Öffnung 78 ist gestuft und besitzt zum Inneren des Ölbehälters 10 hin einen erweiterten Abschnitt 80. Aufgrund einer Materialanhäufung ist sie etwa viermal so lang wie die Wandstärke des Bodens 13. Im Bereich der Öffnung 79 besitzt der Boden 13 einen Anguß 86, der axial fast bis zur Mitte des Topfes 65 reicht und die Öffnung 79 um ein vielfaches der Wandstärke des Bodens 13 verlängert. Die Öffnung 79 ist für den Rückfluß von durch den Kühler 25 geströmten Druckmittel in den Ölbehälter 10 gedacht. Aufgrund des Angusses 86 befindet sich das Ende des Rücklaufkanals immer unter dem Ölspiegel, so daß eine Verwirbelung und Aufschäumung des Öls und Geräusche vermieden werden. Über die Öffnung 78 erfolgt in noch zu beschreibender Weise der Zulauf von Druckmittel zum Kühler 25.

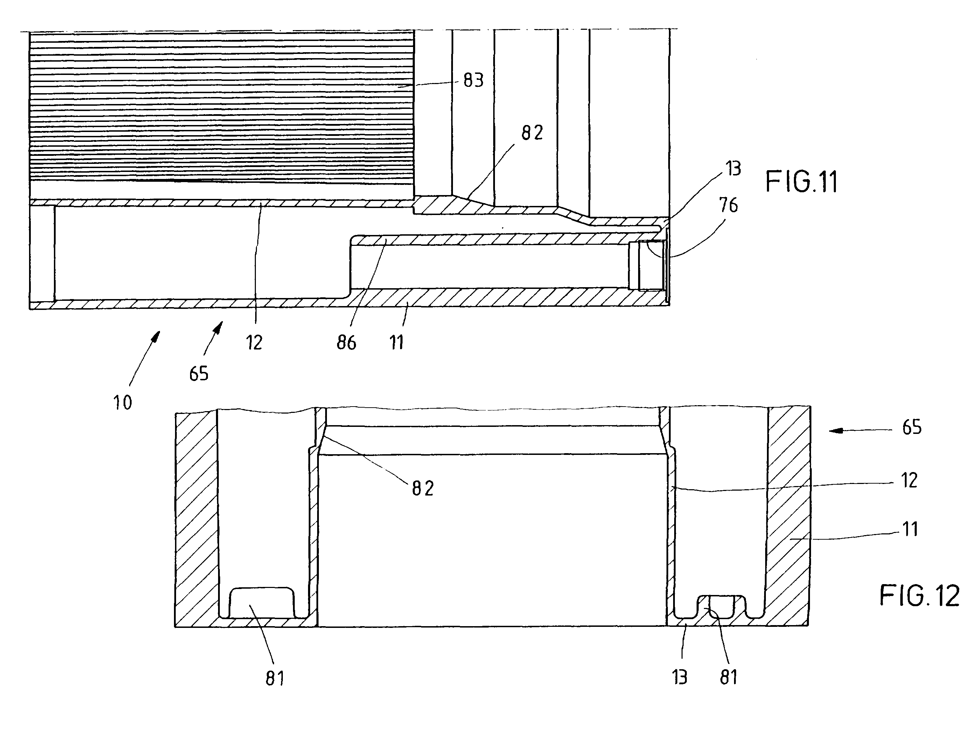

Wie die Figur 11 zeigt ist auch die bedarfsweise verwendete Rücklauföffnung 76 durch einen Anguß 86 verlängert, dessen Ende immer in das sich im Ölbehälter 10 befindliche Druckmittel eingetaucht ist, so daß auch bei einer Verwendung der Rücklauföffnung 76 der Strom des rücklaufenden Öls unter dem Ölspiegel endet.

Wie insbesondere aus Figur 12 ersichtlich, sind an den Behälterboden 13 nach innen hin einzelne Augen 81 angeformt, die bei Bedarf aufgebohrt und mit einem Innengewinde versehen werden können, um optional weitere Geräte am Druckmittelbehälter 10 zu befestigen, z.B. einen Temperatursensor für das Druckmittel.

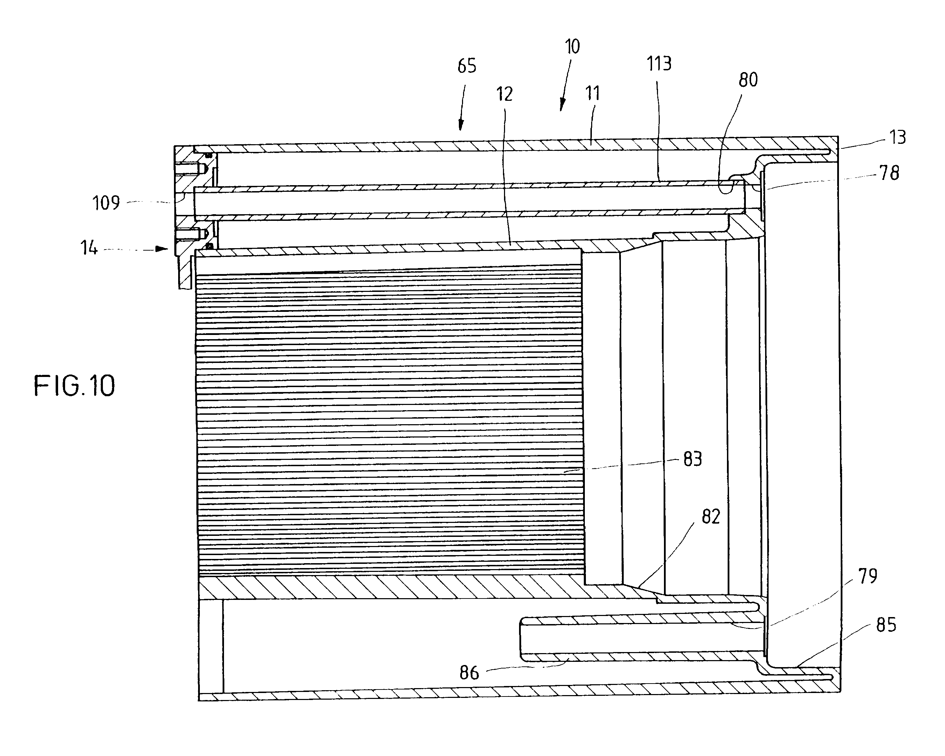

Wie bei der ersten und der zweiten Ausführung so sitzt auch bei der dritten und der vierten Ausführung auf der Motorwelle 36 des Elektromotors 35 ein Lüfterrad 41, das sich unmittelbar hinter dem Kühler 25 befindet. Im Bereich des Lüfterrads sind, wie man den Figuren 10, 11 oder 12 entnehmen kann, der Innen- und der Außendurchmesser der inneren Außenwand 12 größer als im übrigen Bereich. Dadurch wird die Verwendung eines großen Lüfterrads mit einem entsprechend hohem Luftdurchsatz ermöglicht. Am Innendurchmesser erfolgt der Übergang vom größeren auf den kleinen Durchmesserwert in einer Schräge 82, die eine Leitfunktion für den vom Lüfterrad erzeugten Luftstrom besitzt und keinen Luftstau verursacht.

Die innere Außenwand ist innen mit Kühlrippen 83 versehen, die axial verlaufen und radial nach innen weisen. Die äußere Außenwand 11 trägt Kühlrippen 84, die alle parallel zueinander tangential verlaufen und deshalb eine einfache Entformung des Topfes 65 ermöglichen.

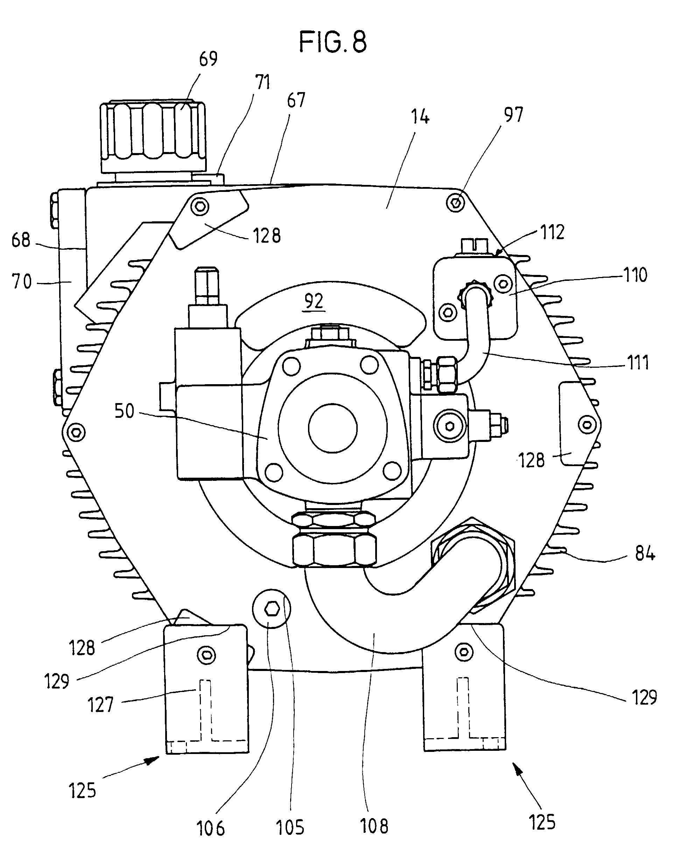

Die dem Behälterboden 13 gegenüberliegende offene Stirnseite des Topfes 65 ist mit dem Deckel 14 verschlossen. Dieser besitzt einen inneren Teil 88 mit einem zentralen Durchgang 89 sowie einen äußeren, ringförmigen Teil 90, der an einem Ringbund 15 eine innere und eine äußere Ringnut zur Aufnahme jeweils eines Dichtrings aufweist und zwischen die äußere Außenwand 11 und die innere Außenwand 12 des Topfes 65 eingeschoben ist, um einen geschlossenen Druckmitteltank zu schaffen. Innerer Teil 88 und äußerer Teil 90 sind über drei etwa 120 Grad voneinander beabstandete Speichen 91 miteinander verbunden, die zwischen sich Freiräume 92 zum Durchtritt von vom Lüfterrad 41 geförderte und zwischen Elektromotor 35 und innerer Außenwand 12 hindurchgeströmter Luft belassen. Der zentrale Teil 88 des Deckels 14 ist so geformt und mit Befestigungsbohrungen 93 versehen, daß wenigstens zwei verschiedene auf dem Markt erhältliche Hydropumpen angeschraubt werden können. Gemäß den Figuren 7 und 8 ist beim dritten Ausführungsbeispiel eine Flügelzellenpumpe 50 angebaut.

Der Deckel 14 verschließt den Topf 65 und ist damit Teil des Ölbehälters 10. Zugleich aber ist er auch Teil des Elektromotors 35, als dessen einer Lagerschild er über Zuganker 93 mit dem zweiten Lagerschild 94 und mit dem mittleren Gehäuseteil 95 verbunden ist, wie man dies aus Figur 7 ersehen kann. Der Deckel 14 deckt mit seinem inneren Teil 88 Wickelköpfe des Elektromotors 35 ab. Der Deckel 14 ist außen sechseckig ausgebildet und besitzt in jedem seiner sechs Ecken eine Befestigungsbohrung 96, durch die hindurch eine Schraube 97 in ein mit einem Innengewinde versehenes Befestigungsauge 98 am Topf 65 eingeschraubt werden kann, um den Deckel 14 und den Topf 65 aneinander zu befestigen. Der Elektromotor 35 wird vom Deckel 14 freitragend ohne Berührung der inneren Außenwand 12 des Topfes 65 gehalten.

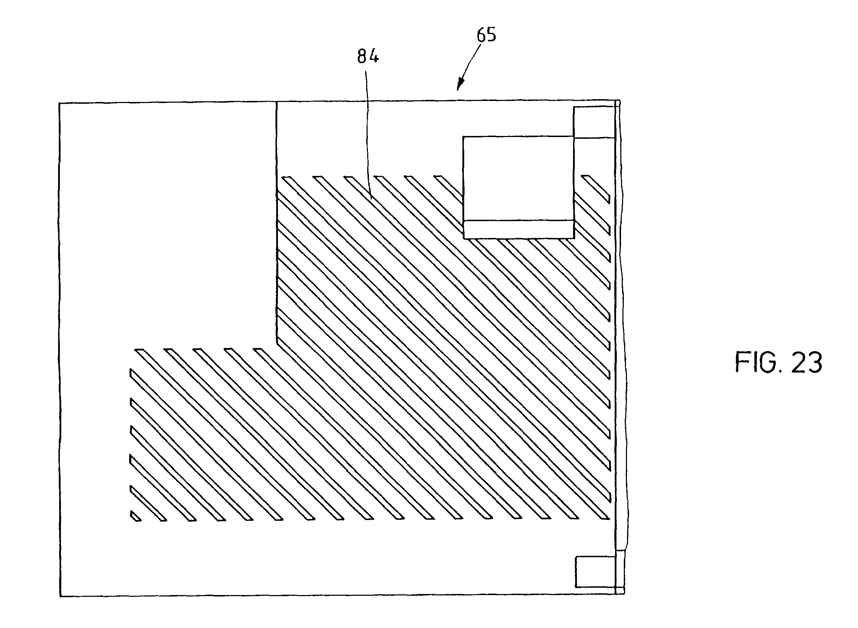

Im Ringbund 15 des Deckels 14 befinden sich drei Öffnungen, über die von außen ein Zugang in das Innere des Ölbehälters 10 möglich ist. Eine erste Öffnung 105 dient zum Ablassen des sich im Behälter 10 befindlichen Öls und ist normalerweise mit einer Verschlußschraube 106 verschlossen. Durch eine zweite Öffnung 107 hindurch saugt die Hydropumpe 50 über einen Saugschlauch 108 Druckmittel aus dem Behälter 10 an. Im Bereich einer dritten Öffnung 109 schließlich ist auf den Deckel 14 außen eine Platte 110 aufgesetzt, der über einen Schlauch 111 Leckageöl der Hydropumpe 50 zugeführt wird und die einen provisorisch verschlossenen Rücklaufanschluß 112 aufweist. Ein Ausgang der Platte 110 geht in die Öffnung 109 des Deckels 14 über. Der Deckel 114 ist am Topf 65 so befestigt, daß seine Öffnung 109 mit der Öffnung 78 im Behälterboden 13 fluchtet. Entsprechend der Öffnung 78 ist auch die Öffnung 109 gestuft. Zwischen den beiden Öffnungen erstreckt sich axial ein Rohr 113 (siehe Figur 10) über dessen Enden jeweils eine Dichtung 114 gestülpt ist und das zusammen mit der Dichtung in den erweiterten Abschnitt 80 der beiden Öffnungen gesteckt ist. Die Art der Dichtung 114 geht näher aus Figur 22 hervor. Man erkennt, daß sie einen radial außerhalb des Rohres 113 befindlichen und außen gerillten Abschnitt 115, sowie einen axial vor der Stirnseite des Rohres 113 befindlichen und mit einem zentralen Durchgang 116 versehenen Abschnitt 117 aufweist. Durch die Dichtung 114 wird eine direkte Berührung zwischen dem Rohr 113 und dem Behälterboden 13 bzw. dem Deckel 14 des Ölbehälters 10 vermieden. Die Dichtung reicht relativ weit über das Rohr 113, so daß Längentoleranzen ausgeglichen werden können. Andererseits ist die Dichtung aufgrund der Rillen an ihrem radialen Außenumfang relativ nachgiebig und deshalb leicht alleine oder zusammen mit dem Rohr in die Öffnungen 78 bzw. 109 einzusetzen.

Leckageöl der Hydropumpe 50 und aus dem System zurückfließendes Öl gelangt also über die Platte 110 und die Öffnung 109 im Dekkel 14 in das Rohr 113. Das Öl fließt durch das Rohr 113 hindurch und gelangt über die Öffnung 78 in den Kühler 25. Nachdem es den Kühler durchflossen hat, tritt es in die Öffnung 79 des Topfes 65 ein und gelangt über den Anguß 80 in den Behälter 10.

Gemäß den Figuren 7, 8 und 9 befindet sich das hydraulische Kompaktaggregat in einer liegenden Gebrauchslage, in der es über zwei Standbeine 125 auf einem Boden abgestützt wird. Jedes Standbein besteht aus einem Stück T-Profil 126, an dessen beide Enden ein Flacheisen 127 angeschweißt ist. Auf der Außenseite des Deckels 14 befindet sich an jeder zweiten Befestigungsbohrung 96 eine Vertiefung 128, die zwei parallel zu einem Radiusstrahl durch die Mitte einer Befestigungsbohrung 96 verlaufende Begrenzungen und eine senkrecht zu dem Radiusstrahl verlaufende Begrenzung aufweist. Der Abstand der beiden parallelen Begrenzungen entspricht der Breite eines Flacheisens 127. Jede Vertiefung 128 kann für eine stehende Gebrauchslage des Kompaktaggregats ein Flacheisen 127 eines Standbeins 125 so aufnehmen, daß der Mittelsteg des T-Profils 126 in einer durch die Achse des Aggregats gehenden Ebene liegt. Die drei Standbeine 125 erstrekken sich dann vom Deckel 14 weg entlang der Hydropumpe 50. Für eine liegende Gebrauchslage des Kompaktaggregates, wie sie in den Figuren 7 bis 9 gezeigt ist, ist im Bereich einer weiteren Befestigungsbohrung 96 eine Vertiefung 129 mit einer parallel zu einer vertikalen und einer parallel zu einer horizontalen Ebene verlaufenden Begrenzungslinie vorhanden. Außerdem ist in einer der Vertiefungen 128 eine Ausbuchtung 129 vorhanden, die ebenfalls von einer in einer vertikalen Ebene befindlichen Begrenzung und von einer in einer horizontalen Ebene liegenden Begrenzung begrenzt wird. Die beiden Vertiefungen 129 nehmen nun zwei Standbeine 125 so auf, daß die beiden Querstege der beiden T-Profile 126 in einer Ebene liegen. Die Standbeine erstrecken sich vom Deckel 14 aus in Richtung auf den Behälterboden 13 zu.

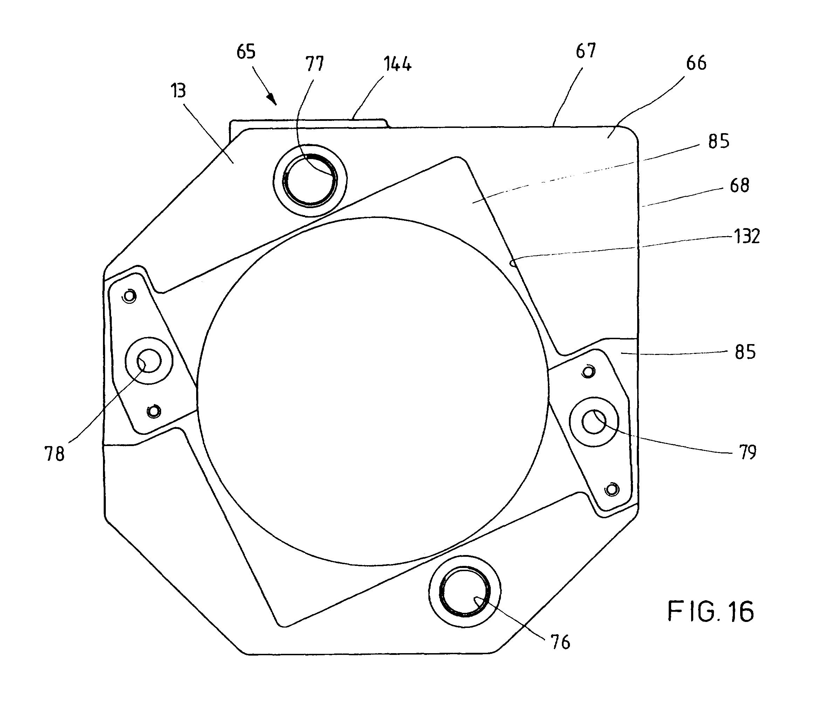

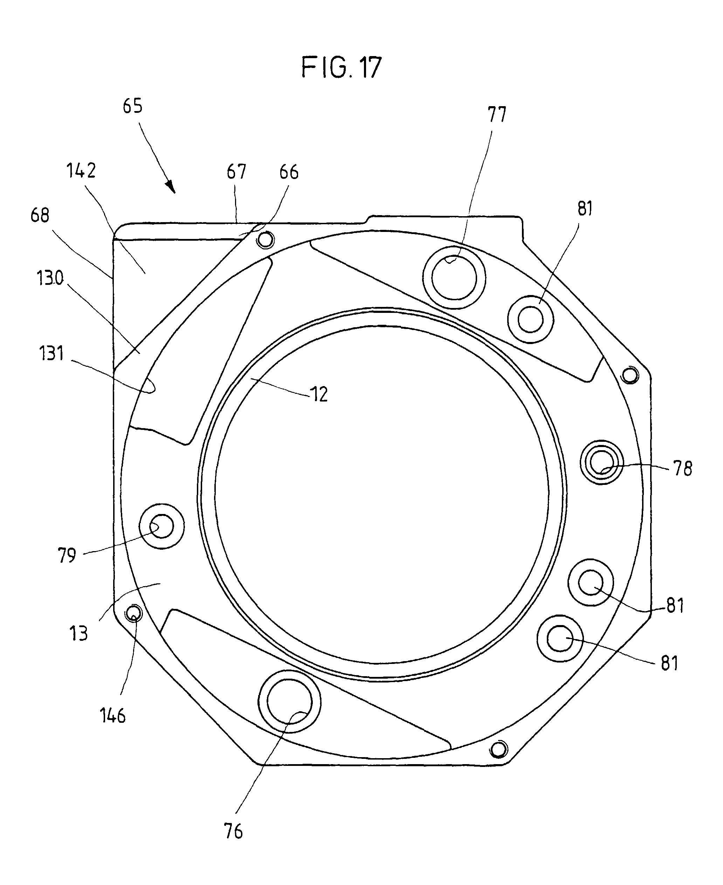

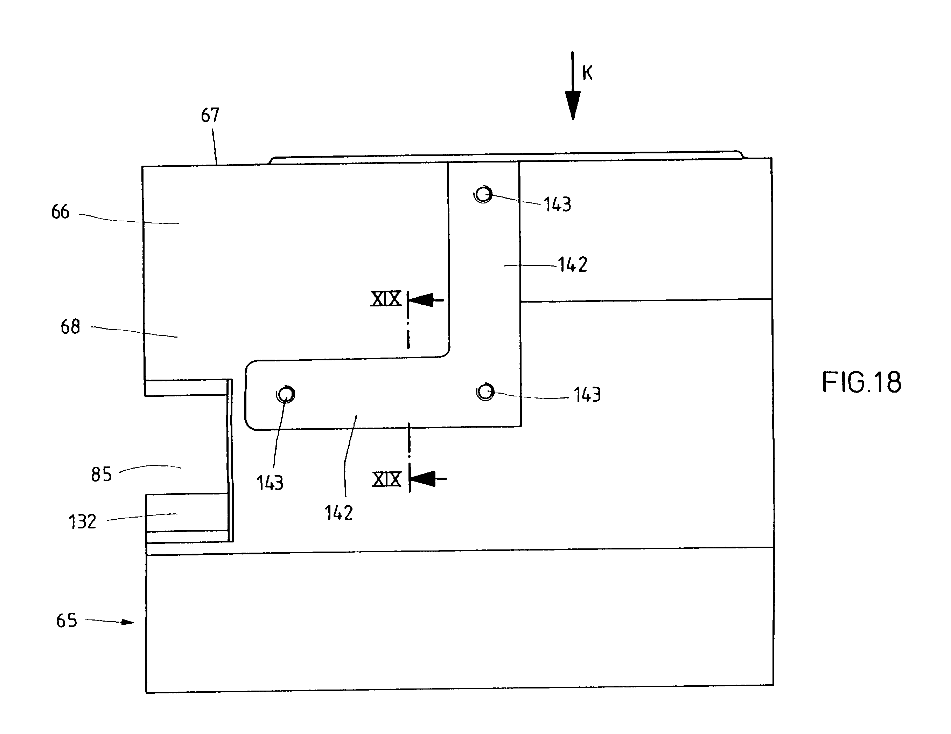

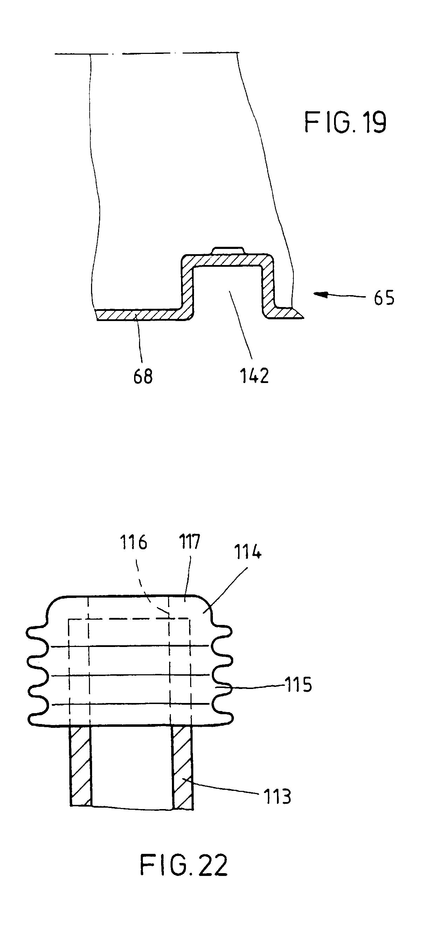

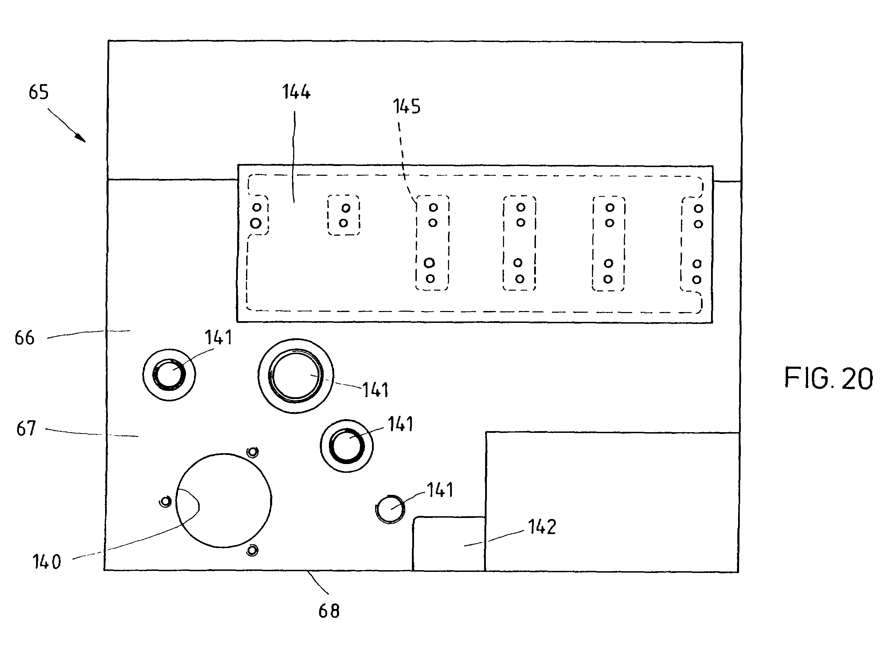

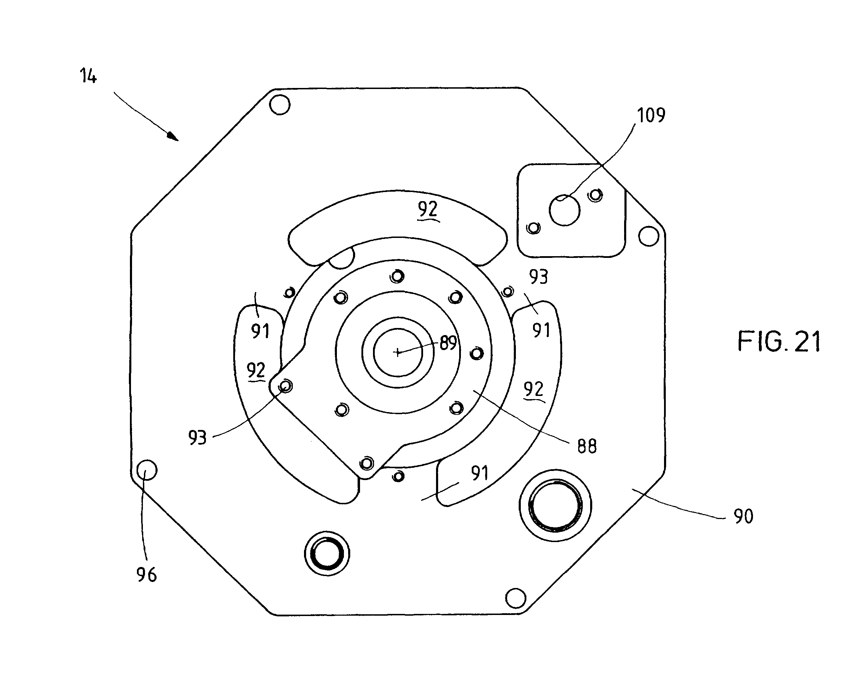

Der grundsätzliche Aufbau des vierten Ausführungsbeispiels, von dem in den Figuren 16 bis 20 der Behältertopf 65 und in Figur 21 der Deckel 14 gezeigt ist, entspricht demjenigen des dritten Ausführungsbeispiels. Wesentlich anders ist, daß die äußere Außenwand 11 des Gehäusetopfes nun nicht kreiszylindrisch, sondern achteckig gestaltet ist. An der offenen Seite des Behältertopfes 65 ist von der äußeren Wand 11 ein Rand 130 etwas nach innen gezogen, der an einer kreisrunden Kante 131 endet. Die innere Außenwand 12 ist wie bei der dritten Ausführung kreiszylindrisch ausgebildet, so daß der Behältertopf 65 zwischen der inneren Außenwand 12 und dem Rand 130 kreisringförmig offen ist. Im Boden 13 des Behältertopfes 65 befinden sich wiederum zwei Gewindebohrungen 76 und 77, wobei die Öffnung 77 als Einfüllöffnung bei stehender Gebrauchslage des Kompaktaggregates und die Öffnung 76 als Rücklauföffnung benutzbar sind. Zur Aufnahme eines Kühlers besitzt der Boden 13 wiederum Vertiefungen 85, die in dem Bereich, in dem die Anschlußohren des Kühlers zu liegen kommen, bis an die Außenkante des Behälterbodens 13 reichen. Im übrigen kann man aus Figur 16 ersehen, daß der durch die Vertiefungen 85 gebildete, im wesentlichen quadratische Aufnahmeraum für einen Kühler so im Boden 13 liegt, daß seine Begrenzungsflächen 132 parallel zu zwei Verbindungslinien zwischen gegenüberliegenden Ecken des Gehäusetopfes 65 verlaufen. Für den Zulauf von Druckmittel zum Kühler und für den Rücklauf vom Kühler in den Behältertopf 65 sind in dessen Boden 13 die zwei Öffnungen 78 und 79 vorhanden. Schließlich erkennt man in der Innenansicht nach Figur 17 noch einzelne vom Behälterboden 13 hochstehende Augen 81 für nachträglich anzubringende Gewindebohrungen.

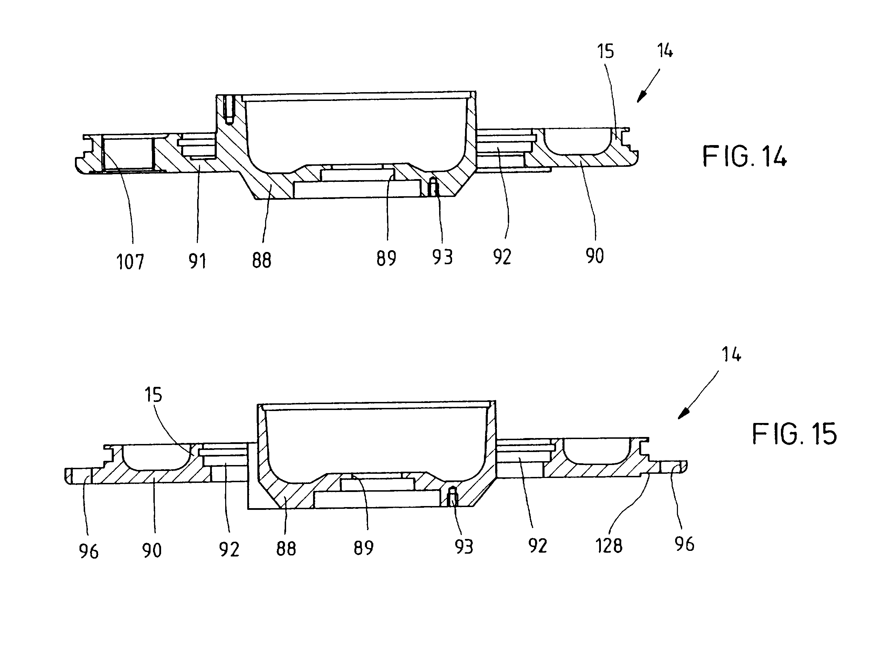

Wie der Behältertopf 65 der Ausführung nach den Figuren 7 bis 15 besitzt auch der Behältertopf 65 der Ausführung nach den Figuren 16 bis 20 außen eine Ausbuchtung 66 mit den senkrecht aufeinanderstehenden Wandteilen 67 und 68. In der Wand 67 befinden sich eine Einfüllöffnung 140, die in einer liegenden Gebrauchslage des Kompaktaggregats benutzt wird, sowie mehrere andere Öffnungen 141 verschiedener Größe, die je nach Bedarf mit Sensoren oder Leitungen bestückt oder mit Verschlußschrauben verschlossen werden. In der Ausbuchtung 66 befindet sich eine rechtwinklige Vertiefung 142 mit zwei Schenkeln, von denen in einer liegenden oder stehenden Gebrauchslage des Kompaktaggregates der eine Schenkel vertikal und der andere Schenkel horizontal verläuft. Jeweils in den vertikal verlaufenden Schenkel wird ein Niveaugeber eingesetzt. Durch die versenkte Anordnung ist dieser vor Beschädigungen geschützt. Von den drei Löchern 143 in der Vertiefung 142 werden jeweils zwei für die Befestigung des Niveaugebers genutzt, während das dritte verschlossen wird. Die Wandteile 67 und 68 der Ausbuchtung 66 schließen sich jeweils übergangslos an einen der acht in stumpfen Winkeln aufeinandertreffenden Wandteilen der äußeren Außenwand 11 des Behältertopfes 65 an.

Für den Aufbau von Ventilen auf den Behältertopf 65 besitzt dieser eine gegenüber einem der erwähnten Wandteile leicht erhöhten Fläche 144, an die zum Inneren des Behältertopfes 65 hin einzelne Materialverdickungen 145 angeformt sind, um genügend lange Befestigungsbohrungen einbringen zu können.

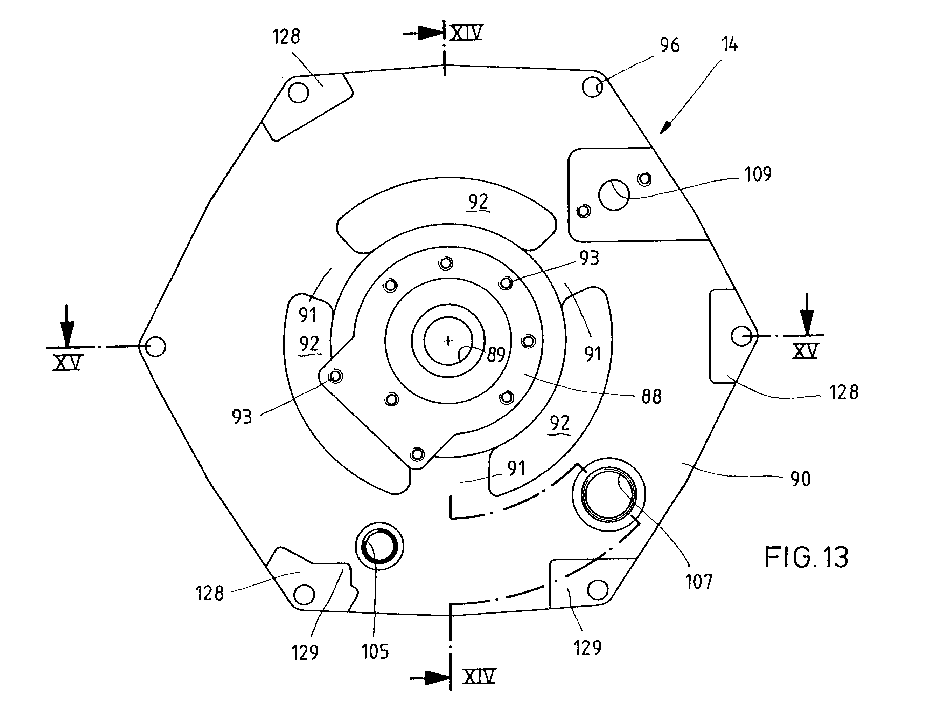

Der in Figur 21 gezeigte Deckel des vierten Ausführungsbeispiels ist weitgehend gleich dem Deckel des dritten Ausführungsbeispiels ausgebildet. Die Bezugszahlen gleicher Öffnungen und Teile sind deshalb aus Figur 13 in Figur 21 übernommen,ohne auf die gleichen Ausbildungen nun näher einzugehen. Es sei lediglich auf drei Unterschiede hingewiesen. Zum einen besitzt der Deckel 14 nach Figur 21 nun entsprechend dem Behältertopf 65 des vierten Ausführungsbeispiels eine achteckige Außenkontur, die sich mit der Außenkontur des Behältertopfes deckt. Der zwischen die Kante 131 der äußeren Außenwand 11 und die innere Außenwand 12 des Behältertopfes 65 eingesetzte Ringbund des Deckels 14 ist dagegen gleich dem Ringbund des Deckels nach Figur 13. Zum zweiten besitzt der Deckel 14 nach Figur 21 nicht sechs, sondern nur vier Befestigungsbohrungen 96, von denen sich jede in einer Ecke der Außenkontur befindet. Die vier Befestigungsbohrungen 96 decken sich mit vier Befestigungsbohrungen 146 im Rand 130 des Gehäusetopfes 65, so daß durch die Bohrungen 96 hindurchgesteckte Schrauben in die Bohrungen 146 eingeschraubt werden können. Damit die Bohrungen 146 genügend lang sein können, befindet sich in jeder Ecke des Behälterbodens 65 mit einer Bohrungen 146 unterhalb des Randes 130 eine Materialverdickung. Der dritte Unterschied zwischen den beiden Deckeln nach Figur 21 und Figur 13 besteht darin, daß der Deckel nach Figur 21 keine Vertiefungen 128 oder 129 für Standbeine aufweist.

Der Behältertopf 65 nach Figur 23 entspricht weitgehendst dem Behältertopf des Ausführungsbeispiels nach den Figuren 7 bis 15. Unterschiedlich ist lediglich der Verlauf der Kühlrippen 84 auf der Außenseite der äußeren Außenwand 11. Diese Kühlrippen verlaufen nun nicht parallel zur Achse des Behältertopfes 65, sondern in parallelen Ebenen, die die Achse in einem Winkel von 45 Grad schneiden. Somit gibt es weder bei einer liegenden noch bei einer stehenden Gebrauchslage des Kompaktaggregates einen Wärmestau an der Unterseite einer Kühlrippe. Warme Luft kann vielmehr in jeder Gebrauchslage nach oben abziehen.

Es sei noch darauf hingewiesen, daß eine Reihe von den in den Unteransprüchen angeführten oder in der Beschreibung erwähnten Merkmalen auch unabhängig von der Ausbildung gemäß Anspruch 1 mit Vorteil angewandt werden können.

## Patentansprüche

1. Hydraulisches Kompaktaggregat mit einem ringzylindrischen, insbesondere kreisringzylindrischen Druckmittelbehälter (10), der eine äußere Außenwand (11) und eine innere Außenwand (12) sowie zwei stirnseitige Flansche (13, 14) aufweist, mit einem vom Druckmittelbehälter (10) umgebenen, durch einen zur Umgebung offenen Kühlluftstrom gekühlten geschlossenen Elektromotor (35) und mit einer vom Elektromotor (35) antreibbaren Hydropumpe (50), **dadurch gekennzeichnet,** daß der Druckmittelbehälter (10) den Elektromotor (35) eng umgibt und die innere Außenwand (12) des Druckmittelbehälters (10) als Leitmittel für den über den Elektromotor (35) streichenden Kühlluftstrom dient.

2. Hydraulisches Kompaktaggregat nach Anspruch 1, **dadurch gekennzeichnet,** daß sich zwischen einer Außenwand (42) des Elektromotors (35) und der inneren Außenwand (12) des Druckmittelbehälters (10) axial verlaufende Rippen (43) erstrecken.

3. Hydraulisches Kompaktaggregat nach Anspruch 1 oder 2, **dadurch gekennzeichnet,** daß der eine stirnseitige Flansch (13 des Druckmittelbehälters (10) als Behälterboden einstückig mit der äußeren Außenwand (11) und mit der inneren Außenwand (12) des Druckmittelbehälters (10) ausgebildet ist.

4. Hydraulisches Kompaktaggregat nach einem vorhergehenden Anspruch, **dadurch gekennzeichnet,** daß der Elektromotor (35) von einem stirnseitigen Flansch (14) des Druckmittelbehälters (10) getragen ist.

5. Hydraulisches Kompaktaggregat nach einem vorhergehenden Anspruch, **dadurch gekennzeichnet,** daß ein stirnseitiger Flansch (14) des Druckmittelbehälters (10) einstückig mit einem Gehäuseteil (51) des Elektromotors (35) ausgebildet ist.

6. Hydraulisches Kompaktaggregat nach Anspruch 4 oder 5, **dadurch gekennzeichnet,** daß der mit dem Elektromotor (35) verbundene stirnseitige Flansch (14) einen inneren Teil (88), an dem der Elektromotor (35) befestigt ist, einen äußeren, ringförmigen Teil (90), mit dem der Druckmittelbehälter (10) verschlossen ist, sowie sich zwischen innerem Teil (88) und äußerem Teil (90) erstreckende Speichen (91) aufweist, zwischen denen der Kühlluftstrom durch den Flansch (14) hindurchtritt.

7. Hydraulisches Kompaktaggregat nach einem vorhergehenden Anspruch, **dadurch gekennzeichnet,** daß ein stirnseitiger Flansch (14) des Druckmittelbehälters (10) einstückig mit einem Gehäuseteil (51) der Hydropumpe (50) ausgebildet ist.

8. Hydraulisches Kompaktaggregat nach einem vorhergehenden Anspruch, **dadurch gekennzeichnet,** daß an wenigstens einem stirnseitigen Flansch (14) des Druckmittelbehälters (10) Standbeine (25) befestigt sind.

9. Hydraulisches Kompaktaggregat nach Anspruch 8, **dadurch gekennzeichnet,** daß sich an einem stirnseitigen Flansch (14), insbesondere an dem stirnseitigen Flansch (14), vor dem sich die Hydropumpe (50) befindet, auf der Außenseite Aussparungen (128, 129) für Standbeine (25) befinden, wobei die Aussparungen (128, 129) eng an die Form der Standbeine (25) angepaßt sind und deren Positionierung vorgeben.

10. Hydraulisches Kompaktaggregat nach einem vorhergehenden Anspruch, **dadurch gekennzeichnet,** daß der Druckmittelzulauf aus dem Druckmittelbehälter (10) zur Hydropumpe (50) und/oder der Druckmittelrücklauf in den Druckmittelbehälter (10) über einen Kanal (54) in einem stirnseitigen Flansch (14) des Druckmittelbehälters (10) erfolgt.

11. Hydraulisches Kompaktaggregat nach einem vorhergehenden Anspruch, **dadurch gekennzeichnet,** daß sich von einer Rücklauföffnung (76, 79) des Druckmittelbehälters (10) aus ein rohrförmiger Anguß (86) um ein Vielfaches der Wandstärke um die Rücklauföffnung (76, 79) herum in das Innere des Druckmittelbehälters (10) hineinerstreckt.

12. Hydraulisches Kompaktaggregat nach einem vorhergehenden Anspruch, **dadurch gekennzeichnet,** daß weitgehend innerhalb der inneren Außenwand (12) des Druckmittelbehälters (10) in einem stirnseitigen Flansch (13) ein Kühler (25) für das Druckmittel angeordnet ist.

13. Hydraulisches Kompaktaggregat nach einem vorhergehenden Anspruch, **dadurch gekennzeichnet,** daß radial weitgehend innerhalb der inneren Außenwand (12) des Druckmittelbehälters (10) im Bereich des einen stirnseitigen Flansches (13) ein Kühler (25) für das Druckmittel angeordnet ist, daß der zweite Flansch (14) im Bereich zwischen der inneren und der äußeren Außenwand (11, 12) des Druckmittelbehälters (10) eine Öffnung (109) aufweist, der Leckageflüssikeit der Hydropumpe (50) und/oder rücklaufende Flüssigkeit zuführbar ist, daß der erste Flansch (13) im Bereich zwischen der inneren und der äußeren Außenwand (11, 12) des Druckmittelbehälters (10) eine Öffnung (78) aufweist, über die Druckmittel in den Kühler einleitbar ist, und daß sich von der Öffnung (78) im ersten Flansch (13) zu der Öffnung (109) im zweiten Flansch (14) innerhalb des Druckmittelbehälters (10) eine Leitung (113) erstreckt.

14. Hydraulisches Kompaktaggregat nach Anspruch 13, **dadurch gekennzeichnet,** daß das Ende der Leitung (113) in einer Dichtung (114) steckt, die einen radial außen an der Leitung (113) befindlichen Abschnitt (115) und einen axial vor der Leitung (113) befindlichen und mit einer zentralen Öffnung (116) versehenen Abschnitt (117) aufweist, und daß das Ende der Leitung (113) zusammen mit der Dichtung (114) in einem erweiterten Teil (80) der Öffnung (80, 109) eines Flansches (13, 14) steckt.

15. Hydraulisches Kompaktaggregat nach einem vorhergehenden Anspruch, **dadurch gekennzeichnet,** daß der Kühlluftstrom von einem Lüfterrad (41) erzeugt wird, das radial innerhalb der inneren Außenwand (12) des Druckmittelbebälters (10) angeordnet ist und auf der Welle (36) des Elektromotors (35) sitzt.

16. Hydraulisches Kompaktaggregat nach einem vorhergehenden Anspruch, **dadurch gekennzeichnet,** daß die äußere Außenwand (11) des Druckmittelbehälters (10) außen mit Kühlrippen (84) versehen ist und daß die Kühlrippen (84) schräg zur Achsrichtung des Druckmittelbehälters (10), vorzugsweise in einem Winkel von 45 Grad, verlaufen.

## Claims

1. Compact hydraulic unit with an annular cylindrical, especially a circularly annular cylindrical pressure medium container (10) that has an outer external wall (11) and an inner external wall (12) as well as two end flanges (13, 14), with an electric motor (35) that is closed, surrounded by the pressure medium container (10) and cooled by a cooling air stream open to the surrounding atmosphere, and with a hydraulic pump (50) driveable by said electric motor (35), **characterized in that** the pressure medium container (10) closely surrounds the electric motor (35), and the inner external wall (12) of said pressure medium container (10) serves as a guide means for the cooling air stream flowing over said electric motor (35).

2. Compact hydraulic unit according to claim 1, **characterized in that** axially extending ribs (43) run between an external wall (42) of the electric motor (35) and the inner external wall (12) of the pressure medium container (10).

3. Compact hydraulic unit according to claim 1 or 2, **characterized in that** one of the end flanges (13) of said pressure medium container (10) is made in one piece with the outer external wall (11) and with the inner external wall (12) of said pressure medium container (10) as a container bottom.

4. Compact hydraulic unit according to a foregoing claim, **characterized in that** the electric motor (35) is supported by an end flange (14) of the pressure medium container (10).

5. Compact hydraulic unit according to a foregoing claim, **characterized in that** an end flange (14) of the pressure medium container (10) is made in one piece with a housing part (51) of the electric motor (35).

6. Compact hydraulic unit according to claim 4 or 5, **characterized in that** the end flange (14) connected with the electric motor (35) has an inner part (88) on which said electric motor (35) is fastened, an outer annular part (90) by which the pressure medium container (10) is sealed, as well as spokes (91), extending between the inner part (88) and the outer part (90), between which the cooling air stream passes through the flange (14).

7. Compact hydraulic unit according to a foregoing claim, **characterized in that** an end flange (14) of the pressure medium container (10) is made in one piece with a housing part (51) of the hydraulic pump (50).

8. Compact hydraulic unit according to a foregoing claim, **characterized in that** legs (25) are mounted on at least one end flange (14) of the pressure medium container (10).

9. Compact hydraulic unit according to claim 8, **characterized in that** recesses (128, 129) for legs (25) are provided externally on an end flange (14), especially on the end flange (14) in front of which the hydraulic pump (50) is located, with said recesses (128, 129) closely matching the shape of the legs (25) and defining their positions.

10. Compact hydraulic unit according to a foregoing claim, **characterized in that** the pressure medium is supplied from the pressure medium container (10) to the hydraulic pump (50) and/or the pressure medium is returned to said pressure medium container (10) through a channel (54) in an end flange (14) of said pressure medium container (10).

11. Compact hydraulic unit according to a foregoing claim, **characterized in that** a tubular extension (86) extends from a return opening (76, 79) of the pressure medium container (10) for a multiple of the wall thickness around return opening (76, 79) into the interior of said pressure medium container (10).

12. Compact hydraulic unit according to a foregoing claim, **characterized in that** a cooler (25) for the pressure medium is located in an end flange (13) largely inside the inner external wall (12) of the pressure medium container (10).

13. Compact hydraulic unit according to a foregoing claim, **characterized in that** a cooler (25) for the pressure medium is located radially, largely inside the inner external wall (12) of the pressure medium container (10) in the vicinity of the one end flange (13), that the second flange (14) has an opening (109) in the area between the inner and outer external walls (11, 12) of the pressure medium container (10) to which fluid leaking from hydraulic pump (50) and/or returning fluid can be supplied, that the first flange (13) has an opening (78) in the area between the inner and outer external walls (11, 12) of said pressure medium container (10) through which pressure medium can be introduced into the cooler, and that a line (113) extends from the opening (78) in the first flange (13) to the opening (109) in the second flange (14) inside said pressure medium container (10).

14. Compact hydraulic unit according to claim 13, **characterized in that** the end of the line (113) extends within a seal (114) that has a portion (115) that is located radially externally with respect to line (113) and a section (117) that is located axially in front of the line (113) and is provided with a central opening (116), and that the end of the line (113) together with seal (114) extends into an expanded part (80) of the opening (80, 109) of a flange (13, 14).

15. Compact hydraulic unit according to a foregoing claim, **characterized in that** the cooling air stream is generated by a fan wheel (41) located radially inside the inner external wall (12) of the pressure medium container (10) and mounted on the shaft (36) of the electric motor (35).

16. Compact hydraulic unit according to a foregoing claim, **characterized in that** the outer external wall (11) of the pressure medium container (10) is provided externally with cooling ribs (84), and said cooling ribs (84) extend at an angle to the axial direction of said pressure medium container (10), preferably at an angle of 45°.

## Revendications

1. Une centrale hydraulique compacte dotée d'un réservoir (10) de fluide de pression de forme cylindrique annulaire, en particulier de forme cylindrique annulaire circulaire, qui présente une paroi (11) extérieure externe et une paroi (12) extérieure interne ainsi que deux flasques (13, 14) faciales, dotée d'un moteur (35) électrique fermé, qui est entouré par le réservoir (10) de fluide de pression et qui est refroidi par un flux d'air froid ouvert sur l'environnement, et dotée d'une pompe (50) hydraulique pouvant être entraînée par le moteur (35) électrique, **caractérisée en ce que** le réservoir (10) de fluide de pression entoure le moteur (35) électrique de très près et la paroi (12) extérieure interne du réservoir (10) de fluide de pression sert de support de guidage pour le flux d'air froid, qui évolue le long du moteur (35) électrique.

2. Une centrale hydraulique compacte conforme à la revendication n° 1, **caractérisée en ce que** des ailettes (43) orientées dans la direction axiale s'étendent entre une paroi (42) extérieure du moteur (35) électrique et la paroi (12) extérieure interne du réservoir (10) de fluide de pression.

3. Une centrale hydraulique compacte conforme à la revendication n° 1 ou n° 2, **caractérisée en ce que** l'une des flasques (13) faciales du réservoir (10) de fluide de pression est conçue d'une pièce avec la paroi (11) extérieure externe et avec la paroi (12) extérieure interne du réservoir (10) de fluide de pression, pour constituer le fond du réservoir.

4. Une centrale hydraulique compacte conforme à une revendication précédente, **caractérisée en ce que** le moteur (35) électrique est porté par une flasque (14) faciale du réservoir (10) de fluide de pression.

5. Une centrale hydraulique compacte conforme à une revendication précédente, **caractérisée en ce que** une flasque (14) faciale du réservoir (10) de fluide de pression est conçue d'une même pièce avec une partie (51) du corps du moteur (35) électrique.

6. Une centrale hydraulique compacte conforme à la revendication n° 4 ou n° 5, **caractérisée en ce que** la flasque (14) faciale reliée au moteur (35) électrique présente un élément (88) intérieur, sur lequel est fixé le moteur (35) électrique, un élément (90) extérieur de forme annulaire, lequel ferme le réservoir (10) de fluide de pression, ainsi que des rayons (91), qui s'étendent entre l'élément (88) intérieur et l'élément (90) extérieur et entre lesquels le flux d'air froid traverse la flasque (14).

7. Une centrale hydraulique compacte conforme à une revendication précédente, **caractérisée en ce que** une flasque (14) faciale du réservoir (10) de fluide de pression est constituée d'une même pièce avec une partie (51) du corps de la pompe (50) hydraulique.

8. Une centrale hydraulique compacte conforme à une revendication précédente, **caractérisée en ce que** des pieds (25) de positionnement sont fixés sur au moins une flasque (14) faciale du réservoir (10) de fluide de pression.

9. Une centrale hydraulique compacte conforme à la revendication n° 8, **caractérisée en ce que** des évidements (128, 129) pour des pieds (25) de positionnement sont situés sur la face extérieure d'une flasque (14) faciale, en particulier sur la flasque (14) faciale devant laquelle est positionnée la pompe (50) hydraulique, cependant que les évidements (128, 129) épousent de près la forme des pieds (25) de positionnement et en indiquent le positionnement.

10. Une centrale hydraulique compacte conforme à une revendication précédente, **caractérisée en ce que** l'alimentation en fluide de pression vers la pompe (50) hydraulique à partir du réservoir (10) de fluide de pression et / ou le retour du fluide de pression dans le réservoir (10) de fluide de pression sont effectués par un canal (54) dans une flasque (14) faciale du réservoir (10) de fluide de pression.

11. Une centrale hydraulique compacte conforme à une revendication précédente, **caractérisée en ce que** un raccord (86) de fonte en forme de tuyau, présentant une épaisseur autour de l'ouverture (76, 79) de retour égale à plusieurs fois l'épaisseur de la paroi, pénètre et s'étend à l'intérieur du réservoir (10) de fluide de pression à partir d'une ouverture (76, 79) de retour dans le réservoir (10) de fluide de pression.

12. Une centrale hydraulique compacte conforme à une revendication précédente, **caractérisée en ce que** un refroidisseur (25) pour le fluide de pression est disposé dans une flasque (13) faciale, largement à l'intérieur par rapport à la paroi (12) extérieure interne du réservoir (10) de fluide de pression.

13. Une centrale hydraulique compacte conforme à une revendication précédente, **caractérisée en ce que** un refroidisseur (25) pour le fluide de pression est disposé à proximité d'une des flasques (13) faciales, largement à l'intérieur par rapport à la paroi (12) extérieure interne du réservoir (10) de fluide de pression dans la direction radiale, que, dans la zone entre les parois (11, 12) extérieures interne et externe du réservoir (10) de fluide de pression, la seconde flasque (14) présente une ouverture (109), vers laquelle peuvent être amenés du fluide de fuite de la pompe (50) hydraulique et / ou du fluide de retour, que, dans la zone entre les parois (11, 12) extérieures interne et externe du réservoir (10) de fluide de pression, la première flasque (13) présente une ouverture (78), par laquelle du fluide de pression peut être conduit dans le refroidisseur, et qu'à l'intérieur du réservoir (10) de fluide de pression, une conduite (113) s'étend de l'ouverture (78) dans la première flasque (13) jusqu'à l'ouverture (109) dans la seconde flasque (14).

14. Une centrale hydraulique compacte conforme à la revendication n° 13, **caractérisée en ce que** l'extrémité de la conduite (113) est enfoncée dans un joint (114), qui présente un segment (115), disposé de façon radiale à l'extérieur de la conduite (113), et un segment (117), disposé de façon axiale devant la conduite (113) et pourvu d'une ouverture (116) centrale, et que l'extrémité de l'ensemble de la conduite (113) et du joint (114) est fixée dans une prolongation (80) de l'ouverture (80, 109) d'une flasque (13, 14).

15. Une centrale hydraulique compacte conforme à une revendication précédente, **caractérisée en ce que** le flux d'air de refroidissement est généré par une roue (41) de ventilateur, qui est disposée à l'intérieur de la paroi (12) extérieure interne du réservoir (10) de fluide de pression dans la direction radiale et qui est fixée sur l'arbre (36) du moteur (35) électrique.

16. Une centrale hydraulique compacte conforme à une revendication précédente, **caractérisée en ce que** l'extérieur de la paroi (11) extérieure externe du réservoir (10) de fluide de pression est pourvu d'ailettes (84) de refroidissement et que les ailettes (84) de refroidissement sont orientées en biais par rapport à la direction de l'axe du réservoir (10) de fluide de pression, de préférence avec un angle de 45 degrés.
